# EUROPÄISCHE PATENTANMELDUNG

(11) **EP 2 093 874 A1**
(43) Veröffentlichungstag der Anmeldung: **26.08.2009**
(21) Anmeldenummer: 08003210.5
(22) Anmeldetag: 21.02.2008
(51) Int. Cl.: H02M 3/335

(54) **Stromversorgungseinrichtung, insbesondere zum redundanten Betrieb mit mehreren, ausgangsseitig parallel geschalteten weiteren Stromversorgungseinrichtungen**

(71) Anmelder: SIEMENS AKTIENGESELLSCHAFT, 80333 München (DE)
(72) Erfinder: Kort, Valentin, 76829 Landau (DE)

(57) **Zusammenfassung**

Eine Stromversorgungseinrichtung (1) weist einen Eingang (11) für eine Eingangswechselspannung (uN) oder für eine aus dieser abgeleiteten Eingangsgleichspannung (uG) sowie einen Ausgang (12) für eine dazu potenzialgetrennte lastabhängige Ausgangsgleichspannung (uA) auf. Sie weist weiterhin eine eingangsseitig angeschaltete Hochsetzstellereinheit (3) mit einer Ladespule (32), einem ersten Schaltelement (33), einer Freilaufdiode (34), einem Ladekondensator (35) und Mitteln zur Spannungsregelung einer ausgangsseitig an der Hochsetzstellereinheit (3) bereitgestellten Wandlereingangsgleichspannung (ul) mittels einer pulsweitenmodulierten Ansteuerung des ersten Schaltelementes (33) auf. Zudem weist die Stromversorgungseinrichtung (1) einen der Hochsetzstellereinheit (3) nachgeschalteten getakteten DC/DC-Wandler (4) mit zumindest einem zweiten Schaltelement, mit einem Transformator zur Potenzialtrennung und mit Mitteln zur geregelt vorgegebenen, lastabhängigen Spannungsabsenkung der Ausgangsgleichspannung (uA) mittels einer pulsweitenmodulierten Ansteuerung des zweiten Schaltelementes auf. Erfindungsgemäß ist das zweite Schaltelement des DC/DC-Wandlers (4) mit einem konstanten Wandler-Tastverhältnis ansteuerbar. Das erste Schaltelement (33) ist mit einem derartigen Steller-Tastverhältnis ansteuerbar, dass die Wandlereingangsgleichspannung (ul) mit zunehmender Belastung sinkt.

## Beschreibung

Die Erfindung betrifft eine Stromversorgungseinrichtung mit einem Eingang für eine Eingangswechselspannung oder für eine aus dieser abgeleiteten Eingangsgleichspannung sowie einen Ausgang für eine dazu potenzialgetrennte lastabhängige Ausgangsgleichspannung. Die Stromversorgungseinrichtung weist eine eingangsseitig angeschaltete Hochsetzstellereinheit mit einer Ladespule, einem ersten Schaltelement, einer Freilaufdiode, einem Ladekondensator und mit Mitteln zur Spannungsregelung einer ausgangsseitig an der Hochsetzstellereinheit bereitgestellten Wandlereingangsgleichspannung mittels einer pulsweitenmodulierten Ansteuerung des ersten Schaltelementes auf. Die Stromversorgungseinrichtung weist weiterhin einen der Hochsetzstellereinheit nachgeschalteten getakteten DC/DC-Wandler mit zumindest einem zweiten Schaltelement, mit einem Transformator zur Potenzialtrennung und mit Mitteln zur geregelt vorgegebenen, lastabhängigen Spannungsabsenkung der Ausgangsgleichspannung mittels einer pulsweitenmodulierten Ansteuerung des zweiten Schaltelementes auf.

Derartige Stromversorgungseinrichtungen sind allgemein bekannt. Sie dienen dazu, eine Eingangsspannung mittels eines Transformators in eine dazu potenzialgetrennte Ausgangsspannung umzuwandeln. Die Eingangsspannung kann z. B. eine gleichgerichtete Netzspannung oder Eingangswechselspannung eines 50Hz/230V- oder eines 60Hz/120V-Stromversorgungsnetzes eines öffentlichen Energieversorgungsunternehmens sein. Die Ausgangsgleichspannung kann in einem Spannungsbereich von 1 V bis 48 V liegen. Insbesondere liegt sie für Automatisierungsanwendungen in einem Spannungsbereich von 15 V bis 24 V.

Die betrachteten Stromversorgungseinrichtungen weisen eine lastabhängige Ausgangsgleichspannung auf. Mit anderen Worten nimmt die geregelte Ausgangsgleichspannung mit zunehmender elektrischer Belastung, d. h. mit zunehmendem Ausgangsstrom, ab. Dadurch wird erreicht, dass insbesondere gleichartige sowie gemeinsam in eine Sammelleitung oder Sammelschiene einspeisende Stromversorgungseinrichtungen im Sinne einer Lastverteilung in etwa gleich belastet werden. Eine parallele Einspeisung ist insbesondere dann erforderlich, wenn die angeschlossenen Verbraucher, wie z. B. Automatisierungskomponenten oder Anlagenteile, bei Ausfall einer der Stromversorgungseinrichtungen unterbrechungsfrei weiter betrieben werden sollen.

Die Spannungsabsenkung kann durch geeignete Rückkopplung eines mittels einer Strommesseinheit erfassten Ausgangsstromwertes regelungstechnisch berücksichtigt werden. Typischerweise geht die Ausgangsgleichspannung, ausgehend von einem Leerlaufspannungswert, linear auf einen Nennlastspannungswert bei einem Nennausgangsstrom zurück. Bei weiterer Belastung der Stromversorgungseinrichtung im Sinne einer Überbelastung oder eines Kurzschlusses kann der Ausgangsstrom auf den Nennstrom begrenzt werden.

Die betrachteten Stromversorgungseinrichtungen sind vorzugsweise zweistufig aufgebaut. Die erste Stufe ist typischerweise eine Hochsetzstellereinheit, die vorzugsweise in einem PFC-Betrieb (für Power Factor Correction) betrieben wird. Die zweite Stufe ist ein DC/DC-Wandler, welcher potenzialgetrennt die Eingangsspannung in die gewünschte Ausgangsgleichspannung umwandelt. Für den Aufbau des DC/DC-Wandlers können prinzipiell unterschiedliche Schaltungstopologien herangezogen werden. So kann der DC/DC-Wandler einen Sperrwandler, einen Durchflusswandler, einen Gegentaktwandler, einen Resonanzwandler oder dergleichen aufweisen. Je nach Schaltungstopologie und Platzbedarf kann der Wirkungsgrad eines derartigen DC/DC-Wandlers sehr unterschiedlich sein. Allgemein gilt, dass der Wirkungsgrad in einem relativ engen Arbeitsbereich des DC/DC-Wandlers ein Maximum aufweist. Dabei spielt das Tastverhältnis eines pulsweitenmodulierten Schaltelementes, insbesondere eines Schalttransistors, eine entscheidende Rolle. Das Tastverhältnis ist dabei von der Eingangsspannung des DC/DC-Wandlers, dessen Ausgangsspannung sowie von dem Übersetzungsverhältnis des Transformators bestimmt. Dies bedeutet für die betrachteten Stromversorgungseinrichtungen mit so genannter "weicher" Kennlinie, d. h. mit einer von der Last abhängigen Ausgangsgleichspannung, dass der Wirkungsgrad nur in einem kleinen Teil des gesamten Lastbereichs hohe Werte aufweist. Ursache hierfür sind die vom Tastverhältnis stark abhängigen Übertragungsverluste des Transformators.

Zur Minderung dieses Problems ist es bekannt, den DC/DC-Wandler der Stromversorgungseinrichtung überzudimensionieren, um in Summe einen höheren Wirkungsgrad zu erreichen.

Nachteilig daran sind die damit verbundene zunehmende Baugröße sowie die höheren Herstellungskosten für eine derartige Stromversorgungseinrichtung.

Es ist somit eine Aufgabe der Erfindung, eine Stromversorgungseinrichtung anzugeben, welche über einen weiten Lastbereich vergleichsweise hohe Wirkungsgradwerte aufweist.

Die Aufgabe wird mit einer Stromversorgungseinrichtung mit den Merkmalen des Patentanspruchs 1 gelöst. Vorteilhafte Ausführungsformen sind in den abhängigen Ansprüchen 2 bis 9 angegeben.

Erfindungsgemäß ist das zweite Schaltelement des DC/DC-Wandlers mit einem konstanten Wandler-Tastverhältnis ansteuerbar. Das erste Schaltelement ist mit einem derartigen Steller-Tastverhältnis ansteuerbar, dass die Wandlereingangsgleichspannung mit zunehmender Belastung, insbesondere proportional, sinkt. Dadurch weist die gesamte Stromversorgungseinrichtung vorteilhaft über nahezu den gesamten Lastbereich einen im Vergleich zum Stand der Technik maximalen und nahezu konstanten Wirkungsgrad auf.

Vorzugsweise ist die Ausgangsgleichspannung von einem Leerlaufspannungswert bis zu einem Nennlastspannungswert linear absenkbar, sodass alle gemeinsam einspeisenden Stromversorgungseinrichtungen in etwa gleich belastet werden.

Die Grundidee der vorliegenden Erfindung ist, dass ausgehend von einem Tastverhältnis des DC/DC-Wandlers mit einem möglichst maximalen Wirkungsgrad nicht das Tastverhältnis des DC/DC-Wandlers, sondern das Tastverhältnis der Hochsetzstellereinheit zur Absenkung der lastabhängigen Ausgangsgleichspannung geändert wird.

Zur Veranschaulichung wird im Folgenden die Übertragungsgleichung eines Durchflusswandlers betrachtet, welcher als DC/DC-Wandler für eine erfindungsgemäße Stromversorgungseinrichtung verwendet werden kann. Hier gilt:

u_{AUS} = T · U_{EIN}/ Ü,

wobei
U_{AUS} die Ausgangsspannung,
U_{EIN} die Eingangsspannung,
Ü das konstante Übersetzungsverhältnis des Transformators und T das Tastverhältnis des primärseitig getakteten Schaltelementes des Durchflusswandlers ist.

Wie die Übertragungsgleichung des Durchflusswandlers zeigt, ist die Ausgangsspannung U_{AUS} direkt proportional zu der Eingangsspannung U_{EIN}, wenn das Tastverhältnis T konstant ist bzw. konstant bleibt. Somit ist über eine Regelung der Eingangsspannung U_{EIN} für den Durchflusswandler bzw. allgemein für den DC/DC-Wandler auch eine Regelung der Ausgangsspannung möglich. Die Regelung der Eingangsspannung U_{EIN} erfolgt nun durch eine Änderung des Tastverhältnisses der vorgeschalteten Hochsetzstellereinheit. Dabei ist der Wirkungsgrad der Hochsetzstellereinheit aufgrund des Fehlens des verlustbehafteten Transformators in der Hochsetzstellereinheit im Wesentlichen unabhängig vom Tastverhältnis des ersten Schaltelementes, d. h. im Wesentlichen maximal über den gesamten Lastbereich.

Nach einer besonders vorteilhaften Ausführungsform ist zumindest ein proportionaler Anteil der Wandlereingangsgleichspannung oder eines Wandlereingangsstroms gewichtet in eine Regelschleife der Hochsetzstellereinheit zurückgekoppelt. Dadurch ist eine äußerst einfache Beschaltung der Mittel zur Spannungsregelung der Hochsetzstellereinheit möglich. In diesem Fall ist eine sonst erforderliche potenzialgetrennte Rückführung der DC/DC-seitigen Ausgangsgleichspannung in die hochsetzstellerseitige Regelschleife, wie z. B. mittels eines Optokopplers, nicht notwendig.

Vorzugsweise ist die lastabhängige Absenkung nach einer weiteren Ausführungsform der Erfindung in einem Bereich von 10 % bis 25 % vorgebbar. So kann beispielsweise eine erfindungsgemäße Stromversorgungseinrichtung einen Leerlaufspannungswert von 15 V und einen Nennlastspannungswert von 13 V aufweisen, auf den dann die Ausgangsgleichspannung mit zunehmender Belastung absinkt.

Nach einer vorteilhaften Ausführungsform ist der Hochsetzstellereinheit ein Gleichrichter zur Gleichrichtung der am Eingang anliegenden Eingangswechselspannung in die gleichgerichtete Eingangsgleichspannung vorgeschaltet. Weist eine solche Stromversorgungseinrichtung einen derartigen Gleichrichter auf, wie z. B. eine Diode oder einen Brückengleichrichter, so kann diese direkt an einer Netzspannung eines öffentlichen Stromversorgungsnetzes betrieben werden. Die Stromversorgungseinrichtung kann in diesem Fall auch als Netzteil betrachtet werden.

Nach einer Ausführungsform sind der Gleichrichter und die nachgeschaltete Hochsetzstellereinheit für Spannungswerte der Eingangswechselspannung in einem Bereich von 85 V bis 260 V ausgebildet.

Einer weiteren Ausführungsform zufolge ist die Hochsetzstellereinheit für eine am Eingang anliegende Eingangsgleichspannung von bis zu 400 V ausgebildet. Insbesondere kann am Eingang der Stromversorgungseinrichtung eine (konstante) Eingangsgleichspannung, wie z. B. von 24 V oder 48 V, anliegen.

Dadurch kann die erfindungsgemäße Stromversorgungseinrichtung an den wichtigsten Netzspannungen, insbesondere an einem 230V- oder 120V-Stromversorgungsnetz, ohne Umschaltmaßnahmen betrieben werden.

Einer weiteren Ausführungsform zufolge ist die Ausgangsgleichspannung in einem Spannungsbereich von 1 V bis 48 V vorgebbar. Dadurch können z. B. Automatisierungskomponenten, Steuergeräte und dergleichen direkt mit der Ausgangsgleichspannung versorgt werden.

Im Besonderen weist der DC/DC-Wandler einen Sperrwandler, einen Durchflusswandler, einen Gegentaktwandler, einen Resonanzwandler oder dergleichen auf. Derartige Wandler sind allgemein bekannt. Allen ist gemein, dass der Wirkungsgrad bei einem vorgegebenen konstanten Tastverhältnis über nahezu den gesamten Lastbereich in etwa konstant ist.

Die Erfindung sowie vorteilhafte Ausführungen der Erfindung werden im Weiteren anhand der nachfolgenden Figuren näher beschrieben. Es zeigen:
- FIG 1: einen Schaltplan einer beispielhaften Stromversorgungseinrichtung mit einer Hochsetzstellereinheit und einem nachgeschalteten DC/DC-Wandler nach dem Stand der Technik,
- FIG 2: ein Diagramm mit in Abhängigkeit von der Belastung eines DC/DC-Wandlers eingetragenen Werten für den Wirkungsgrad,

- FIG 3: einen Schaltplan einer beispielhaften Stromversorgungseinrichtung gemäß der Erfindung und
- FIG 4: einen Schaltplan einer beispielhaften erfindungsgemäßen Stromversorgungseinrichtung in einer besonders vorteilhaften Ausführungsform.

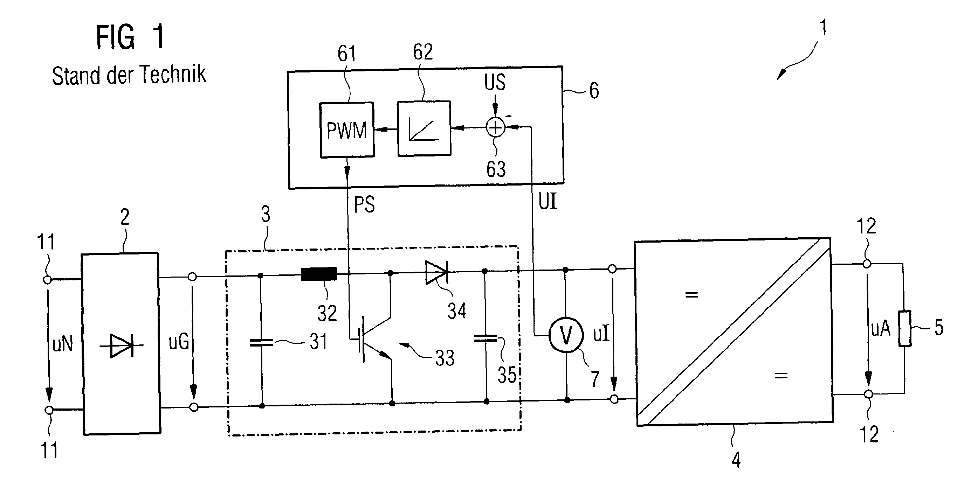

FIG 1 zeigt einen Schaltplan einer beispielhaften Stromversorgungseinrichtung 1 mit einer Hochsetzstellereinheit 3 und einem nachgeschalteten DC/DC-Wandler 4 nach dem Stand der Technik.

Das gezeigte Stromversorgungsgerät 1 weist im linken Teil der FIG 1 bereits einen Gleichrichter 2 zur Gleichrichtung einer an einem Eingang 11 anliegenden Eingangswechselspannung uN in eine Eingangsgleichspannung uG auf. Dem Gleichrichter 2 ist in bekannter Weise eine Hochsetzstellereinheit 3 nachgeschaltet, welche die gleichgerichtete Eingangsgleichspannung uG ausgangsseitig in eine Wandlereingangsgleichspannung uI umsetzt. Die Hochsetzstellereinheit 3 weist weiterhin im Eingangsbereich einen Pufferkondensator 31 zur Glättung der gepulsten Eingangsgleichspannung uG sowie eine Ladespule 32, eine Freilaufdiode 34, einen Ladekondensator 35 sowie einen Schalttransistor als erstes Schaltelement 33 auf. Der Schalttransistor 33 kann z. B. ein MOSFET-Transistor oder ein IGBT-Transistor sein.

Der Hochsetzstellereinheit 3 ist ein DC/DC-Wandler 4 nachgeschaltet, welcher die Wandlereingangsgleichspannung uI in eine Ausgangsgleichspannung uA umsetzt. Mit dem Bezugszeichen 12 ist der Ausgang der Stromversorgungseinrichtung 1 bezeichnet. An diesem Ausgang 12 ist eine elektrische Last 5, symbolisiert durch das Schaltsymbol eines Widerstandes, geschaltet. Es können alternativ auch mehrere Stromversorgungseinrichtungen 1 gemeinsam in dieselbe Last 5 einspeisen, vorzugsweise über eine gemeinsame Sammelleitung bzw. Stromschiene.

Zur Regelung der jeweiligen Spannungen weist die Stromversorgungseinrichtung 1 als Regelungsmittel eine Steuereinheit 6 auf. Diese kann ein Mikrocontroller sein. Sie kann alternativ mittels herkömmlicher elektronischer Bauelemente realisiert sein. Die Steuereinheit 6 weist einen Pulsweitenmodulator 61 auf, welcher ausgangsseitig ein digitales Ansteuersignal PS für eine Steuerelektrode des ersten Schaltelementes 33 ausgibt. Dem Pulsweitenmodulator 61 ist eingangsseitig ein nicht weiter bezeichnetes Reglersignal eines Reglers 62 zugeführt. Letzteres wird von einem Vergleicher 63 ausgegeben, welcher einen vorgebbaren konstanten Spannungssollwert US für den DC/DC-Wandler 4 mit einem mittels einer Spannungsmesseinheit 7 erfassten Wandlereingangsspannungsmesswert UI vergleicht. Mittels der gezeigten Regelschleife ist durch Veränderung des Steller-Tastverhältnisses im pulsweitenmodulierten Ansteuersignal PS eine geregelte Einstellung der Wandlereingangsgleichspannung uI möglich. Zur lastabhängigen Absenkung der Ausgangsgleichspannung uA kann der DC/DC-Wandler 4 nicht weiter gezeigte Rückkopplungsmittel aufweisen, um z. B. einen Laststrommesswert in den Regelkreis des DC/DC-Wandlers 4 zurückzukoppeln.

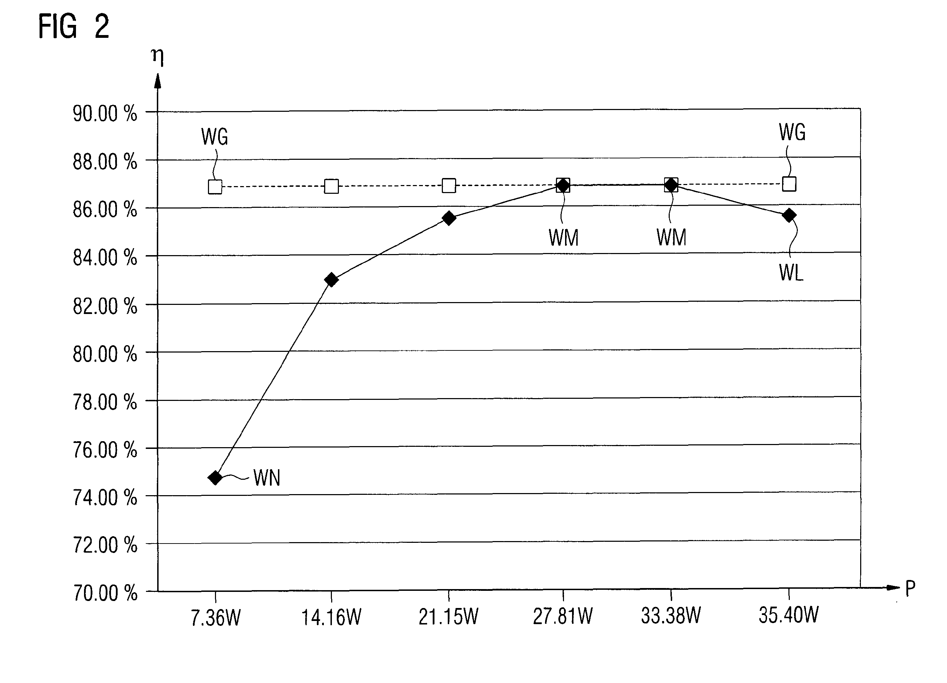

FIG 2 zeigt ein Diagramm mit in Abhängigkeit von der Belastung eines DC/DC-Wandlers 4 eingetragenen Werten für den Wirkungsgrad. Mit P ist die elektrische Ausgangsleistung, mit dem griechischen Buchstaben η ist der Wirkungsgrad des DC/DC-Wandlers 4 bezeichnet. Der DC/DC-Wandler 4 der Stromversorgungseinrichtung 1 weist beispielhaft eine Nennausgangsleistung von ca. 35 W auf. Wie die FIG 2 weiter zeigt, weist der DC/DC-Wandler 4 bei geringer Belastung, wie z. B. bei 7,36 W, einen vergleichsweise schlechten Wirkungsgradwert WN von nur ca. 75 % auf. Erst bei mittlerer bis hoher Ausgangsleistung weist der DC/DC-Wandler 4 akzeptable hohe Wirkungsgradwerte WM von ca. 87 % auf. Dagegen sinkt der Wirkungsgrad η bei weiterer Belastung auf einen Wirkungsgradwert WL bei maximaler Last von ca. 85,5 % ab.

Gestrichelt eingezeichnet sind gewünschte und über einen weiten Lastbereich des DC/DC-Wandlers 4 gleiche Wirkungsgradwerte WG.

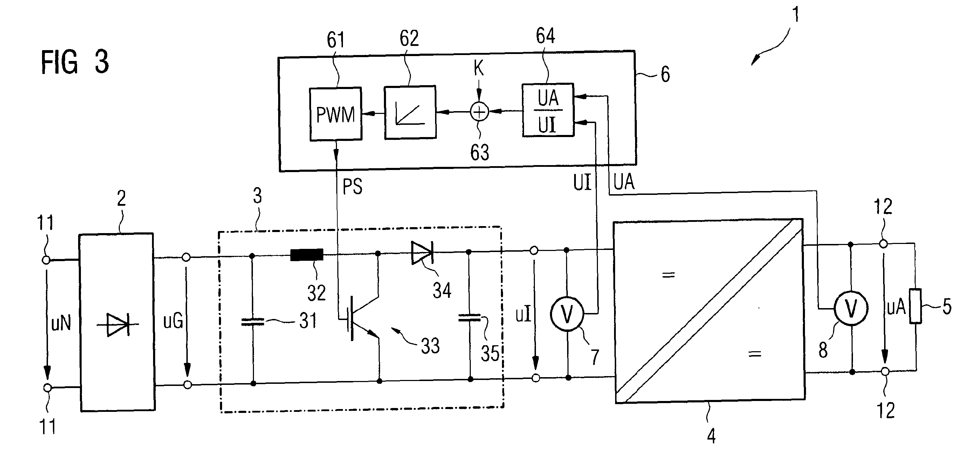

FIG 3 zeigt einen Schaltplan einer beispielhaften Stromversorgungseinrichtung 1 gemäß der Erfindung. Erfindungsgemäß ist nun das zweite Schaltelement des DC/DC-Wandlers 4 mit einem konstanten Wandler-Tastverhältnis ansteuerbar. Das zweite Schaltelement selbst ist in der FIG 3 nicht dargestellt. Es ist jedoch allgemein bekannt, dass ein DC/DC-Wandler 4 typischerweise je nach Schaltungstopologie ein zweites Schaltelement oder auch zwei im Gegentakt ansteuerbare zweite Schaltelemente aufweisen kann.

Weiterhin ist das Steller-Tastverhältnis der Hochsetzstellereinheit 3 zum Ansteuern des ersten Schaltelementes 33 derart ansteuerbar, dass das Verhältnis von der Ausgangsgleichspannung uA zu der Wandlereingangsgleichspannung uI im Wesentlichen konstant ist. Im vorliegenden Beispiel sind die Mittel zur Spannungsregelung der ausgangsseitig an der Hochsetzstellereinheit 3 bereitgestellten Wandlereingangsgleichspannung uI wiederum durch die mit dem Bezugszeichen 6 bezeichnete Steuereinheit realisiert. Sie weist analog zum Beispiel der FIG 1 einen Pulsweitenmodulator 61 und den vorgeschalteten Regler 62 auf. Dem Regler 62 ist wiederum ein Vergleicher 63 vorgeschaltet, welcher nun einen konstanten vorgebbaren Wert K mit dem Ergebnis einer Quotientenbildung UA:UI vergleicht. Die Quotientenbildung erfolgt beispielhaft mittels eines Dividierers 64, welchem eingangsseitig ein Wandlereingangsspannungsmesswert UI und ein Ausgangsspannungsmesswert UA zugeführt werden. Die beiden Messwerte UI, UA stammen vorzugsweise von jeweils einer Spannungsmesseinheit 7, 8.

Im eingeschwungenen Zustand sind der Wert der Konstanten K und der Quotientenwert UA:UA im Wesentlichen gleich. Sinkt die Ausgangsgleichspannung uA nun am Ausgang 12 des DC/DC-Wandlers 4 aufgrund einer zunehmenden Belastung, so sinkt nun auch der Wert des durch den Dividierer 64 gebildeten Quotienten UA:UI. Der niedrigere Quotientenwert UA:UI wird dem nachfolgenden Vergleicher 63 zugeführt. Das dem Regler 62 zugeführte Vergleichsergebnis ist nun gleichfalls geringer und veranlasst diesen, ein kleineres Steller-Tastverhältnis an den Pulsweitenmodulator 61 auszugeben. Das ausgangsseitige pulsweitenmodulierte Ansteuersignal PS steuert das erste Schaltelement 33 nun so an, dass ein geringerer Ladestrom in den Ladekondensator 35 fließt und folglich die dort anliegende Wandlereingangsgleichspannung uI sinkt. Dadurch stellt sich bereits nach kurzer Regelzeit wiederum ein konstantes Verhältnis von der Ausgangsgleichspannung uA zu der Wandlereingangsgleichspannung uI ein.

Der gezeigte Regelkreis kann z. B. mittels einer Softwareroutine auf einem Mikrocontroller als Steuereinheit 6 nachgebildet sein. Alternativ können die Mittel zur Regelung der Wandlereingangsgleichspannung uI mittels analoger Bauelemente wie Operationsverstärker, Transistoren und dergleichen realisiert werden.

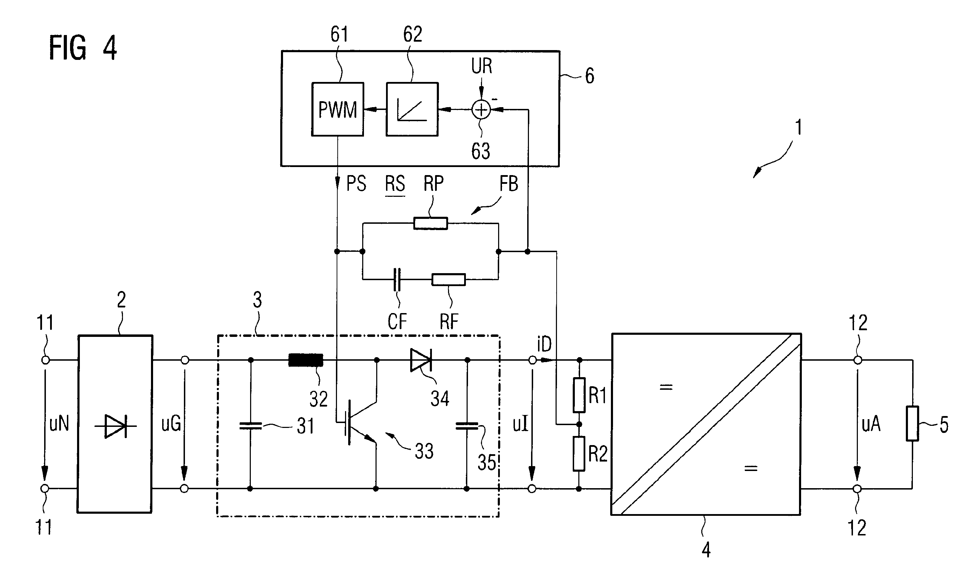

FIG 4 zeigt einen Schaltplan einer beispielhaften erfindungsgemäßen Stromversorgungseinrichtung 1 in einer besonders vorteilhaften Ausführungsform.

In diesem Fall wird mittels eines Spannungsteilers R1, R2 ein anteiliger Spannungswert der Wandlereingangsgleichspannung uI dem Vergleicher 63 zugeführt, welcher diesen Spannungswert mit einem Referenzspannungswert UR vergleicht. Alternativ könnte auch ein anteiliger Stromwert des Wandlereingangsstroms iD zur Erfassung der Belastung ausgewertet werden. Um nun eine belastungsabhängige Absenkung der Wandlereingangsgleichspannung uI zu erreichen, wird diese bzw. ein anteiliger Spannungswert gewichtet in eine Regelschleife RS der Hochsetzstellereinheit 3 zurückgekoppelt. Mit FB ist dabei ein Rückkoppelglied bezeichnet, welches aus einer Reihenschaltung aus einem Filterkondensator CF und einem Filterwiderstand RF sowie aus einem dazu angeordneten Parallelwiderstand RP gebildet ist.

In der FIG 4 ist durch entsprechende Dimensionierung der Widerstände RP, RF die Schräge von einer maximalen Wandlereingangsgleichspannung im unbelasteten Zustand zu einer minimalen Wandlereingangsgleichspannung bei Nennlast einstellbar. Mit anderen Worten führt hier eine Verringerung des Widerstandswertes des Parallelwiderstandes RP zu einer höheren Gewichtung der Rückkopplung und somit zu einer größeren Absenkung der Wandlereingangsgleichspannung uI mit zunehmender Belastung.

## Patentansprüche

1. Stromversorgungseinrichtung, insbesondere zum redundanten Betrieb mit mehreren, ausgangsseitig parallel geschalteten weiteren Stromversorgungseinrichtungen, welche aufweist
- einen Eingang (11) für eine Eingangswechselspannung (uN) oder für eine aus dieser abgeleiteten Eingangsgleichspannung (uG) sowie einen Ausgang (12) für eine dazu potenzialgetrennte lastabhängige Ausgangsgleichspannung (uA),
- eine eingangsseitig angeschaltete Hochsetzstellereinheit (3) mit einer Ladespule (32), einem ersten Schaltelement (33), einer Freilaufdiode (34), einem Ladekondensator (35) und mit Mitteln zur Spannungsregelung einer ausgangsseitig an der Hochsetzstellereinheit (3) bereitgestellten Wandlereingangsgleichspannung (uI) mittels einer pulsweitenmodulierten Ansteuerung des ersten Schaltelementes (33) und
- einen der Hochsetzstellereinheit (3) nachgeschalteten getakteten DC/DC-Wandler (4) mit zumindest einem zweiten Schaltelement, mit einem Transformator zur Potenzialtrennung und mit Mitteln zur geregelt vorgegebenen, lastabhängigen Spannungsabsenkung der Ausgangsgleichspannung (uA) mittels einer pulsweitenmodulierten Ansteuerung (PS) des zweiten Schaltelementes,
**dadurch gekennzeichnet,**
**dass** das zweite Schaltelement des DC/DC-Wandlers (4) mit einem konstanten Wandler-Tastverhältnis ansteuerbar ist und dass das erste Schaltelement (33) mit einem derartigen Steller-Tastverhältnis ansteuerbar ist, dass die Wandlereingangsgleichspannung (uI) mit zunehmender Belastung sinkt.

2. Stromversorgungseinrichtung nach Anspruch 1, **dadurch gekennzeichnet, dass** das erste Schaltelement (33) derart ansteuerbar ist, dass das Verhältnis von der Ausgangsgleichspannung (uA) zu der Wandlereingangsgleichspannung (uI) im Wesentlichen konstant ist.

3. Stromversorgungseinrichtung nach Anspruch 1 oder 2, **dadurch gekennzeichnet, dass** zumindest ein proportionaler Anteil der Wandlereingangsgleichspannung (uI) oder eines Wandlereingangsstroms (iD) gewichtet in eine Regelschleife (RS) der Hochsetzstellereinheit (3) zurückgekoppelt ist.

4. Stromversorgungseinrichtung nach einem der vorangegangenen Ansprüche, **dadurch gekennzeichnet, dass** die lastabhängige Absenkung in einem Bereich von 10 % bis 25 % vorgebbar ist.

5. Stromversorgungseinrichtung nach einem der vorangegangenen Ansprüche, **dadurch gekennzeichnet, dass** der Hochsetzstellereinheit (3) ein Gleichrichter (2) zur Gleichrichtung der am Eingang (11) anliegenden Eingangswechselspannung (uN) in die gleichgerichtete Eingangsgleichspannung (uG) vorgeschaltet ist.

6. Stromversorgungseinrichtung nach Anspruch 5, **dadurch gekennzeichnet, dass** der Gleichrichter (2) und die nachgeschaltete Hochsetzstellereinheit (3) für Spannungswerte der Eingangswechselspannung (uN) in einem Bereich von 85 V bis 260 V ausgebildet sind.

7. Stromversorgungseinrichtung nach einem der vorangegangenen Ansprüche, **dadurch gekennzeichnet, dass** die Hochsetzstellereinheit (3) für eine am Eingang (11) anliegende Eingangsgleichspannung (uG) von bis zu 400 V ausgebildet ist.

8. Stromversorgungseinrichtung nach einem der vorangegangenen Ansprüche, **dadurch gekennzeichnet, dass** die Ausgangsgleichspannung (uA) in einem Spannungsbereich von 1 V bis 48 V vorgebbar ist.

9. Stromversorgungseinrichtung nach einem der vorangegangenen Ansprüche, **dadurch gekennzeichnet, dass** der DC/DC-Wandler (4) einen Sperrwandler, einen Durchflusswandler, einen Gegentaktwandler, einen Resonanzwandler oder dergleichen aufweist.
